(19) Europäisches Patentamt
European Patent Office
Office européen des brevets

(11) **EP 4 345 720 A1**

(12) **EUROPEAN PATENT APPLICATION**

(43) Date of publication:
**03.04.2024 Bulletin 2024/14**

(21) Application number: **22199221.7**

(22) Date of filing: **30.09.2022**

(51) International Patent Classification (IPC):
***G06Q 10/30*** *(2023.01)*

(52) Cooperative Patent Classification (CPC):
**G06Q 10/30**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **B R, Chethan Ravi**
**577134 Chickmagalur District, Karnataka (IN)**

• **CHAITANYA, O.V.R.Krishna**
**560067 Bangalore, Karnataka (IN)**
• **PRAHARAJ, Amlan**
**560100 Bangalore, Karnataka (IN)**
• **RAMANATH, Vinay**
**560070 Bengaluru, Karnataka (IN)**
• **SINGAM, Srividhya**
**518360 Kurnool District, Andhra Pradesh (IN)**

(74) Representative: **Horn Kleimann Waitzhofer**
**Schmid-Dreyer**
**Patent- und Rechtsanwälte PartG mbB**
**Theresienhöhe 12**
**80339 München (DE)**

(54) **SYSTEM AND METHOD FOR MANAGING END-OF-LIFE PRODUCTS**

(57) A computer system and method for managing End-of-Life products is disclosed herein. The method comprises generating, by a processor (204), a virtual representation of at least one part of the End-of-Life product based on inputs received from a source (212, 224). Further, the virtual representation is processed to determine a part condition associated with the at least one part. Based on the part condition and at least one operational attribute associated with the at least one part, a health state of the at least one part is classified into at least one of a plurality of health states. Further, a circularity decision for managing the at least one part is identified from a knowledge graph, based on the health state of the at least one part. Based on the circularity decision identified, a recommendation for managing the at least one part is generated, on a graphical user interface (216).

FIG 8

800

EP 4 345 720 A1

**Description**

Technical field

The present invention relates to product lifecycle management, and in particular relates to a computer system and method for managing End-of-Life products.

Background

Managing End-of-Life products is an important aspect in product life cycle management. The term 'End-Of-Life product' as used herein, refers to a tangible product at the end of its product lifecycle, and which is no longer suitable for an originally intended primary application. At present, decision on whether to reuse, refurbish, recycle or discard an End-of-Life product is based on an individual's knowledge and experience.

Each country has several rules and regulations for specific industries with respect to managing End-of-Life products. For several products, a manufacturer of the product is liable to handle their respective End-of-Life products as per predefined regulations. In the automobile industry, for example, there exists an Extended Producers Responsibility. Extended Producer Responsibility is a policy approach under which manufacturers are given a significant responsibility - financial and/or physical - for the treatment or disposal of End-of-Life products. Failure to handle End-of-Life products properly may result in huge costs for the manufacturer. Consequently, the manufacturer of a product requires a systematic approach for handling the product at its End-of-life.

Concepts such as 'design for disassembly', 'design for dismantling', 'sustainable product designs' etc. have been in existence for several years. However, the scale and magnitude of problems associated with a variety of End-of-Life products is significant.

Currently, circular economy as model of production and consumption, involves sharing, leasing, reusing, repairing, refurbishing and recycling existing materials and products for emphasizing design-based implementation of three base principles: eliminating waste and pollution, circulating products and materials, and regeneration of nature. However, implementation of the circular economy model at present requires extensive manual efforts, for example, in determining how an End-of-Life product may be handled further.

In light of the above, there exists a need for an improved system and method for managing End-of-Life products for enabling implementation of the circular economy model.

Summary

Variously disclosed embodiments comprise methods and computer systems that may be used to manage End-of-Life products.

According to a first aspect of the invention, a computer-implemented method of managing an End-of-Life product. The method includes generating, by a processor, a virtual representation of at least one part of the End-of-Life product, using a reconstruction algorithm, based on at least one input received from a source. The method further includes processing the virtual representation to determine a part condition associated with the at least one part of the End-of-Life product, wherein the part condition indicates a category of damage associated with the at least one part of the End-of-Life product. The method further includes classifying a health state of the at least one part of the End-of-Life product into at least one of a plurality of health states, based on at least the part condition and at least one operational attribute associated with the at least one part of the End-of-Life product. The method further includes identifying, from a knowledge graph, at least one circularity decision for managing the at least one part of the End-of-Life product based on the health state of the at least one part of the End-of-Life product. The method further includes generating at least one recommendation for managing the at least one part of the End-of-Life product based on the at least one circularity decision identified, on a graphical user interface. In an embodiment, the method further includes performing a simulation based on one or more predetermined simulation settings corresponding to the identified circularity decision for managing the at least one part of the End-of-Life product and validating the identified circularity decision based on a simulation result generated upon performing the simulation.

According to a second aspect of the invention, a computer system may be arranged and configured to execute the steps of the computer-implemented method according to the first aspect of the invention.

According to a third aspect of the invention, a computer program product may comprise computer program code which, when executed by the computer system according to the second aspect of the invention, causes the computer system to carry out the method according to the first aspect of the invention.

According to a fourth aspect of the invention, a computer-readable medium may comprise the computer program product according to the third aspect of the invention. By way of example, the described computer-readable medium may be non-transitory and may further be a software component on a storage device.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the spirit and scope of the disclosure in its broadest form.

Also, before undertaking the detailed description below, it should be understood that various definitions for certain words and phrases are provided throughout this patent document and those of ordinary skill in the art will understand that such definitions apply in many, if not most, instances to prior as well as future uses of such defined words and phrases. While some terms may comprise a wide variety of embodiments, the appended claims may expressly limit these terms to specific embodiments.

Brief description of figures

FIG 1 shows a flowchart of a method for generating a knowledge graph based on expert knowledge of a human expert applied to an End-of-Life product, in accordance with an embodiment of the present invention;

FIG 2 illustrates a functional block diagram of an example computer system or data processing system that facilitates management of End-Of-Life products, in accordance with an embodiment of the present invention;

FIG 3 shows an Artificial Neural Network, in accordance with an embodiment of the present invention;

FIG 4 shows a workflow for identifying health state of a gas turbine using a classification model, in accordance with an embodiment of the present invention;

FIG 5 shows an example of a multilayer perceptron, in accordance with an embodiment of the present invention;

FIG 6 shows a flowchart of a method for managing an End-of-Life product, in accordance with an embodiment of the present invention;

FIGS 7A-C shows an example of a workflow for generating at least one recommendation for managing a gas turbine engine at End-of-life, in accordance with an embodiment of the present invention;

FIG 8 shows a graphical user interface, in accordance with an embodiment of the present invention; and

FIG 9 illustrates a block diagram of a data processing system, in accordance with an embodiment of the present invention.

Detailed description

Various technologies that pertain to systems and methods for managing End-of-Life products will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present patent document will be described with reference to exemplary non-limiting embodiments.

In the present document, an approach is suggested to manage lifecycle of an End-of-Life product. The term 'product' as used herein refers to a tangible product that is produced via a manufacturing process. Non-limiting examples of products include vehicles, Computerized Numerical Control machines, electromechanical systems (such as motors, generators etc.), cars, trains, gas turbines, wind turbines, electronic devices, electrical appliances, embedded systems, aerospace systems and components, furniture etc.

The product approaches end of product lifecycle, i.e., an End-of-Life due to several factors such as lack of maintenance support, damages or product obsolescence. In other words, the product becomes an End-of-Life product, when it ceases to be useful in an originally intended primary application.

It should be appreciated that it may be difficult to determine ways of managing End-of-Life products of varying degrees of degradation or when each End-of-Life product comprises a plurality of parts, each of which may be at varying degrees of degradation. For example, an End-of-Life product or parts therein may be reused in an alternative application, recycled, refurbished or discarded based on respective states of the End-of-Life product or the parts therein. The state of the End-of-Life product or the parts therein is indicative of an extent to which the product or the parts have degraded from an originally manufactured state. A human expert may determine steps for further management of the End-of-Life product or the parts therein based on several factors, including but not limited to, industry regulations, maintenance history, operational attributes, nature of damage or degradation etc. associated with the End-of-Life product or the parts therein, in comparison to an originally manufactured state. It may be appreciated that capturing expert knowledge from the human expert, based on circularity decisions taken in different scenarios, enables automation of the process of managing subsequent End-of-Life products.

To enable lifecycle management of End-of-Life products, firstly, a knowledge graph is generated based on expert knowledge obtained from at least one human expert. The expert knowledge for a given End-of-Life product comprises a circularity decision made by the human expert for each of the one or more part of the End-of-Life product based on a primary application of the End-of-Life product, one or more operational attributes and one or more part conditions associated with one or more parts of the End-of-Life product. The term 'operational attribute' as used herein may include, but not limited to, standard operating conditions associated with the product, operational parameters used in the primary application, performance characteristics, operational capacity of the product. In addition, the expert knowledge may also comprise one or more actions performed by the human expert in relation to the circularity decision taken. The term 'circularity decision' as used herein refers to a decision associated with further handling or management of an End-of-Life product. The circularity decisions may include for example, decisions to reuse, recycle, refurbish, discard etc. at least a part of the End-of-Life product. In a preferred embodiment, the knowledge base is a knowledge graph.

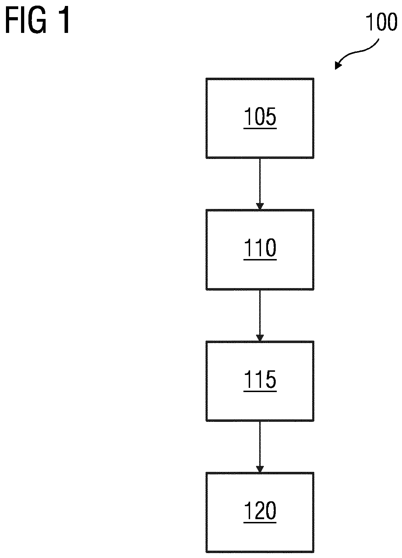

FIG 1 shows a flowchart of a method 100 for generating a knowledge graph based on expert knowledge of a human expert applied to a first End-of-Life product, in accordance with an embodiment of the present invention. Here, the first End-of-Life product may be a product that is functionally and structurally similar to a second End-of-Life product for which recommendations for further handling are to be subsequently generated based on the knowledge graph. For example, one or more first End-of-Life products may include one or more motors of different operational attributes such as ratings, average load, number of starts and stops, primary application (e.g., oil drilling and extraction, or for pumping of cooling water in a petrochemical plant etc.). Therefore, knowledge graphs generated based on application of expert knowledge to the motors of different ratings may be used for automatically generating recommendations for managing any similar motor at End-of-Life. The method 100 comprises steps 105 to 120.

At step 105, one or more data objects comprising a primary application of the first End-of-Life product, operational attributes and one or more part conditions associated with one or more parts of the first End-of-Life product, and a corresponding circularity decision are obtained from one or more sources. The term 'data object' as used herein refers to a data structure that comprises values associated with the primary application, the operational attributes, the part conditions, and the circularity decision associated with at least one part of the first End-of-Life product. In an example, the one or more sources for obtaining the data objects include an input device that enables the human expert to manually input the data objects. In another example, the one or more sources may include a Product Lifecycle Management tool. In yet another example, the one or more sources may include a database. For example, technical reports or operational logs comprising details about the first End-of-Life product may be parsed or processed using a Natural Language Processing algorithm to generate the data objects.

In an example, the data objects corresponding to a part of the first End-of-Life product may include categorical variables indicative of a part identifier (e.g., 'blade'), one or more part conditions associated with the part (e.g., 'Cracks', 'TBC spallation'), a health state of the part (e.g. 'Healthy') and a primary application (e.g. 'aerospace') of the first End-of-Life product, and one or more continuous variables indicative of operational attributes (e.g., temperature of 80°C, 100 starts, etc.) associated with the first End-of-Life product, and a categorical variable indicative of the circularity decision taken by the human expert (e.g., 'Reuse', 'recycle, 'discard') for the part.

Further, one or more actions performed in relation to the circularity decision may be stored in the form of for example, text objects, linked objects, embedded objects or a combination thereof. In an example, the data object associated with the one or more actions comprise one or more continuous variables indicative of simulation settings used by the human expert to perform simulations for validating the circularity decision. For example, the human expert may perform simulations for validating a circularity decision to reuse a first End-of-Life product in the same primary application or in a different alternative application.

In an example, a first data object corresponds to the identifier, a second data object corresponds to the part condition, a third data object corresponds to the operational attributes, a fourth data object corresponds to the primary application, a fifth data object corresponds to the circularity decision, and a sixth data object corresponds to the one or more actions performed in relation to the circularity decision.

At step 110, the one or more data objects are mapped to a predetermined ontology model. Upon mapping, the predetermined ontology model may include descriptors corresponding to the first End-of-Life product. For example, in case of a motor, the descriptors may be associated with rating, winding details, total hours of operation, average load, number of start cycles and primary application. In an embodiment, mapping of the one or more data objects to the ontology model comprises identifying an object type associated with each of the data objects. Further, the data object is mapped to a node in the ontology model corresponding to the object type identified. More specifically, instances or values of the data object is mapped to the respective node in the ontology model.

At step 115, triples are computed based on relationships between the mapped data objects in the ontology model using a predefined library. An example of a predefined library used for generation of the triples is a Web Ontology Language (OWL) library. The term 'triple' as used herein refers to a set of three entities that codifies a statement about the mapped product parameters in the form of subject-predicate-object expressions. An example of a triple is (dataobject_a, relation1, dataobject_b) which links a data object 'a' to another data object 'b' via a relation 'relation1'. Further, the at least one knowledge graph is generated based on the triples computed. The knowledge graph is a graph structure defined by nodes, edges and properties, wherein two nodes linked by an edge represent the subject and the predicate that are related by a certain property (i.e., predicate). In implementation, the knowledge graph is based on Resource Description Framework (RDF) format.

The knowledge graph comprises one or more subgraphs and an action cluster related to each of the subgraphs. The term 'subgraph' as used herein refers to a section of the knowledge graph that contains an identifier, health state, part condition, and operational attribute of at least one part of the first End-of-Life product, and the primary application of the first End-of-Life product. The action cluster comprises a decision node within the knowledge graph that comprise data objects indicative of the circularity decision taken for the at least one part of the first End-of-Life product and one or more action nodes that comprise data objects indicative of the one or more actions performed in relation to the circularity decision. In an example, at least one node in the action cluster comprises a data object (e.g., a categorical variable) indicative of a circularity decision made by the human expert for managing the at least one part of the first End-of-Life product. Further, data objects indicative of the one or more actions performed in relation to the circularity decision may be specified for example, in a child node connected to the node corresponding to the circularity decision.

At step 120, the knowledge graph is further stored in a graph database. Non-limiting examples of graph databases include GraphDB, MongoDB and DataStax. Further, the knowledge graph may also be updated or expanded based on newer circularity decisions made by the human expert corresponding to other first End-of-Life products.

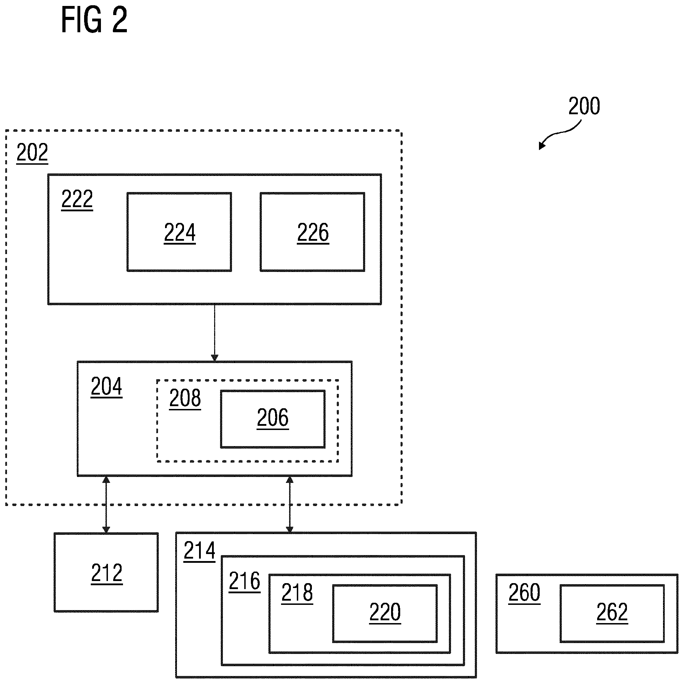

The process of generating recommendations for managing a second End-of-Life product based on the knowledge graph generated for one or more first End-of-Life products is explained in detail with reference to FIGS 2 to 6. Hereinafter, a second End-of-Life product for which recommendations are to be generated based on expert knowledge in a knowledge graph, is simply referred to as the 'End-of-Life product' and a first End-of-Life product used for generating the knowledge graph is referred to as the 'other End-of-Life product'.

FIG 2 illustrates a functional block diagram of an example computer system or data processing system 200 that facilitates management of lifecycle of an End-of-Life (EOL) product, in accordance with an embodiment of the present invention.

The computer system 200 may include a lifecycle management platform 202 including at least one processor 204 that is configured to execute at least one End-of-Life (EOL) management module 206 from a memory 208 accessed by the processor 204. Herein, the lifecycle management platform 202 may include functionalities of managing an End-of-Life product by, for example, providing recommendations for managing the End-of-Life product, and validating the recommendations for managing the End-of-Life product using simulations. The EOL management module 206 may be configured (i.e., programmed) to cause the processor 204 to carry out various acts and functions described herein. For example, the described EOL management module 206 may include and/or correspond to one or more components of the lifecycle management platform 202 that is configured to manage lifecycle of End-of-Life products.

By way of example, the lifecycle management platform 202 may be cloud-based, internet-based and/or be operated by a provider of simulation tools. The user may be located close to the lifecycle management platform 202 or remote to the lifecycle management platform 202, e.g., using a workstation for connecting to the lifecycle management platform 202, e.g., via the internet, wherein the workstation may include an input device 212 and a display device 214. In some examples, the lifecycle management platform 202 may be installed and run on a user's device, such as a computer, laptop, pad, on-premise computing facility, or the like.

Examples of product systems that may be adapted to include the product lifecycle management features described herein may include Product Lifecycle Management (PLM) tools such as Teamcenter of Siemens Industry Software Inc, US. However, it should be appreciated that the systems and methods described herein may be used in other product systems (e.g., product lifecycle management (PLM) tools, product data management (PDM) tools, and/or any other type of system that maintains lifecycle data associated with a product.

To enable enhanced lifecycle management for End-of-Life products, the described product system or computer system 200 may include the at least one input device 212 and the at least one display device 214 (such as a display screen).

The described processor 204 may be configured to generate a graphical user interface (GUI) 216 through the display device 214. Such a graphical user interface 216 may include GUI elements such as buttons, links, search boxes, lists, text boxes, images, scroll bars usable by the user to provide inputs through the input device 212. For example, the inputs may include one or more images associated with an End-of-Life product. In another example, the inputs may include one or more operational attributes and/or a primary application of the End-of-Life product. By way of example, the graphical user interface 216 may include an EOL recommendation UI 218 provided to the user for viewing one or more recommendations for managing the End-of-Life product. In the present embodiment, the EOL recommendation UI 218 further includes a simulation UI 220 that enables the user to view simulations or simulation results for validating the one or more recommendations generated on the EOL recommendation UI 218. In an example, different types of simulations may be performed for validating the one or more recommendations. For example, 1D simulations, finite element simulations, motion simulations, data-driven simulation, physics-based simulation, hybrid simulations etc. or a combination thereof may be used to validate one or more recommendations. The computer system 200 further comprises a data store 222.

In an embodiment, the EOL management module 206 and/or the processor 204 is configured to generate a virtual representation of at least one part of the End-of-Life product, using a reconstruction algorithm, based on at least one input received from a source. In an embodiment, the source is a 3D scanner configured to provide one or more scanned images of the at least one part of End-of-Life product to the computer system 200. Non-limiting examples of 3D scanners include desktop 3D scanners, handheld laser 3D scanners, portable 3D scanners, wireless 3D scanners, contact 3D scanners (e.g., Coordinate Measuring Machines (CMM), articulated arms), structured light 3D scanners, modulated light 3D scanners, non-contact active 3D scanners (e.g., time-of-flight 3D laser scanner, triangulation-based 3D scanners, conoscopic systems), non-contact passive 3D scanners (e.g., stereoscopic systems, photometric systems, photogrammetric systems, silhouette-based techniques), industrial 3D scanners and handheld-devices (such as smartphones) installed with 3D scanning applications. In another embodiment, the source may be an imaging device configured to provide one or more images of the at least one part of End-of-Life product to the computer system 200. For example, the imaging device may include borescopes, digital cameras, industrial cameras, thermal cameras etc. In yet another embodiment, the source may be a file database 224 comprising a plurality of images corresponding to the at least one part of the End-of-Life product, captured using one or more of the above-mentioned scanning or imaging devices. In yet another embodiment, the source may include one or more sensors configured to sense one or more parameters such as noise levels, vibration levels, temperature etc., that are indicative of a degradation of the at least one part of the End-of-Life product. Non-limiting examples of such sensors may include acoustic sensors, thermal sensors and vibration sensors. In addition to the above, the source may also include outputs of tests performed to identify internal defects in the at least one part of the End-of-Life product. Non-limiting examples of such tests may include, for example, Eddy current testing, magnetic testing, radiographic testing, resonant testing, thermographic testing, and ultrasonic testing. The reconstruction algorithm may include, for example, 2D image reconstruction methods,3D reconstruction methods or signal reconstruction methods known in the art.

In an embodiment, the virtual representation of the at least one part of the End-of-Life product is in the form of multi-dimensional representations. For example, the multidimensional representations include two-dimensional representations and three-dimensional representations. Non-limiting examples of multi-dimensional representations include 2D images, 3D images, point clouds, or 3D models such as solid CAD models, and surface models. Point clouds comprise a collection of data points or coordinates in three dimensions based on measurements of the at least one part of the End-of-Life product made, typically by 3D laser scanners and/or Light Detection and Ranging (LIDAR) technology. A surface model is an approximation of a surface of the at least one part of the End-of-Life product, generalized from sample data. Other examples of virtual representations may include 3D topologically structured data derived from 2D images through 3D mapping and object reconstruction, primitive models, polygon models, B-spline models, non-uniform rational basis spline models, wireframe models etc. It must be understood by a person skilled in the art that such multidimensional representations may be adapted to represent both external features and internal features & defects associated with the End-of-Life product based on the inputs from the sources.

The EOL management module 206 and/or the processor 204 is further configured to process the virtual representation to determine a part condition associated with the at least one part of the End-of-Life product. The part condition indicates a category of damage associated with at least one part of the End-of-Life product. Herein, the term 'damage' may include failure modes, defects, and faults associated with the at least one part of the End-of-Life product. In an embodiment, if the virtual representation is a two-dimensional image, processing the virtual representation comprises providing the two-dimensional image to a trained computer vision model. In a preferred embodiment, the computer vision model is an image segmentation model based on feature pyramidal network architecture for Fast Recurrent Convolutional Neural Network (Fast R-CNN). The computer vision model is pretrained using a supervised learning algorithm based on a training dataset comprising a plurality of images indicative of damages in one or more other products that are functionally and structurally similar to the End-of-Life product, along with labels corresponding to part condition in each of the images. The plurality of images may be obtained from, for example, field service inspections of the one or more other products. In an example, if the End-of-Life product is a motor, the corresponding one or more other products may include other motors having similar ratings and design. Upon training, the computer vision model generates an output indicative of the part condition in any given input image. For example, the output may be one-dimensional vector of size 16x1 indicative of the part condition associated with the at least one part of the End-of-Life product. In an embodiment, images provided to the computer vision model may be preprocessed to avoid discrepancies resulting from lighting conditions.

In another embodiment, if the virtual representation is a three-dimensional model, processing the virtual representation to determine the part condition comprises comparing the 3D model of the at least one part of the End-of-Life product to a three-dimensional model corresponding to an original design of the product. Based on the comparison, one or more geometric features indicative of deviations from the original design of the product are identified. Herein, the term deviations indicate differences in structure or dimensions due to, for example, wear and tear from prolonged usage, cracks or other forms of damages due to impacts, damages due to overloading, failures from following incorrect operating procedures etc. For example, in case of a tyre, deviations may be indicative of worn-out treads on the tyre. The deviations may be indicated by distinctive geometric features corresponding to dimensions, corners, edges, blobs, ridges, image texture or other compound features associated with one or more regions of the 3D model. In an example, intersection operation available in CAD tools may be executed using a predefined script for identifying the one or more geometric features indicative of the deviations based on a point-cloud associated with the at least one part of the End-of-Life product and a solid CAD model corresponding to an original design of the at least one part of the End-of-Life product. More specifically, the intersection operation overlays the point cloud and the solid CAD model to identify the one or more non-intersecting geometric features indicative of the deviations.

Further, the one or more geometric features are analyzed using an artificial intelligence model to identify the part condition corresponding to the at least one part of the End-of-Life product. In an embodiment, the artificial intelligence model corresponds to application of a geometric deep learning technique based on a convolutional neural network (CNN). The CNN may be pretrained based on a training dataset comprising a plurality of 3D models of one or more other End-of-Life products and 3D models of respective original designs of the one or more other End-of-Life products, and respective part condition labels, using a supervised learning algorithm. Herein, the one or more other End-of-Life products may be functionally and structurally similar to the End-of-Life product. The trained CNN model may be applied to the intersected or overlayed 3D models to identify the part condition. More specifically, an output of the artificial intelligence model is a vector indicative of the part condition.

The EOL management module 206 and/or the processor 204 is further configured to classify a health state of the at least one part of the End-of-Life product into at least one of a plurality of health states, based on at least the part condition and at least one operational attribute of the at least one part of the End-of-Life product. In an embodiment, classifying the health state of the at least one part of the End-of-Life product into at least one of a plurality of health states comprises providing a feature vector indicative of at least the part condition and the operational attribute to a classification model. For example, the feature vector may be a (m+n)-long vector embedding comprising a m-long damage vector embedding and n-long attribute vector embedding. The m-long damage vector embedding may include embeddings corresponding to the part condition associated with the at least one part of the End-of-Life product. The n-long attribute vector embedding is an embedding corresponding to standard operational attributes of the at least one part of the End-of-Life product in the primary application. In an embodiment, the feature vector may also include an embedding indicative of the primary application of the End-of-Life product.

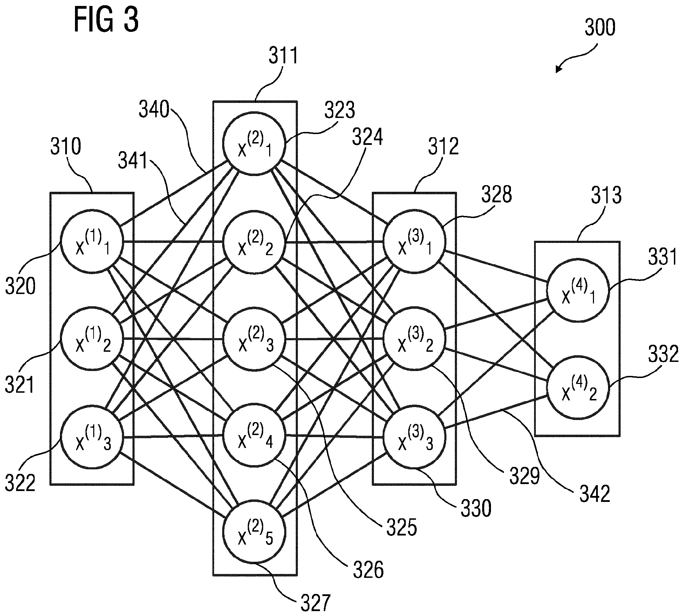

The classification model may be trained to classify feature vectors using any of the classifier algorithms, including but not limited to, decision trees, Naive Bayes classifiers, clustering algorithms (e.g., K-Nearest Neighbors (K-NN)), Support Vector Machines (SVMs) and Artificial Neural Networks (ANNs). In a preferred embodiment, the classifier algorithm uses an ANN as explained later with reference to FIG 3. Upon application of the classification model to the feature vector, the classification model further generates an output indicative of the health state of the at least one part of the End-of-Life product. In an implementation, the output of the classification model is a categorical value corresponding to different health states, e.g., 'Good health', 'Medium health' and 'Poor health'.

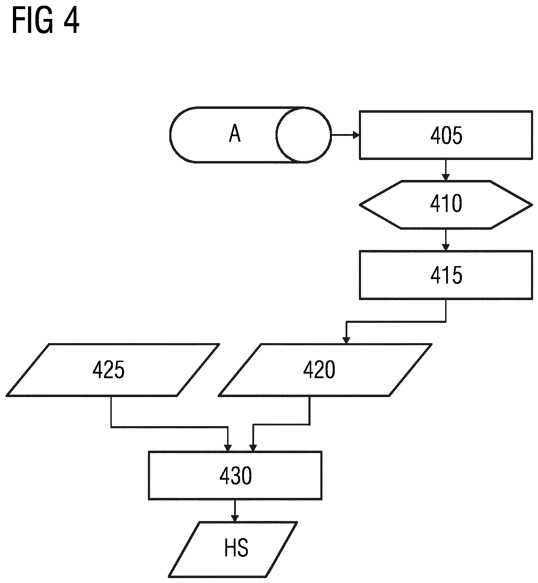

An exemplary workflow for classifying the health state of a gas turbine is explained in detail later, with reference to FIG 4.

The EOL management module 206 and/or the processor 204 is further configured to identify, from a knowledge graph stored in a graph database 226, at least one recommendation for managing the at least one part of the End-of-Life product based on the health state of the at least one part of the End-of-Life product. In an embodiment, the graph database 226 may be part of the data store 222 associated with the computer system 200. The at least one recommendation comprises one or more actions to be performed for managing the at least one part of the End-of-Life product. The knowledge graph may be generated in prior, by the EOL management module 206 and/or the processor 204, using expert knowledge corresponding to one or more other End-of-Life products based on method 100 explained earlier with reference to FIG 1.

In an embodiment, identifying the at least one recommendation for managing the at least one part of the End-of-Life product comprises generating a first subgraph based on at least the health state, the part condition, and the operational attribute of the at least one part of the End-of-Life product and the primary application of the End-of-Life product. In an example, the first subgraph is generated by mapping each of the health state of the at least one part of the End-of-Life product, the part condition, the operational attribute and the primary application of the End-of-Life product to an ontology model for generating a structured output in the form of the first subgraph. In an embodiment, the ontology model is predefined in an ontology file stored in the file database 224. The process of creating the first subgraph is similar to the process of creating the knowledge graph as explained earlier with reference to FIG 1.

Further, the first subgraph is compared to one or more second subgraphs present in the knowledge graph to identify a contextually similar second subgraph. Herein, the term 'second subgraph' refers to a subgraph present in the knowledge graph that corresponds to the at least one other End-of-Life product.

In an embodiment, the first subgraph and the one or more second subgraphs are compared by comparing respective vectorized forms. In other words, the first subgraph is converted into a first vector embedding, and the one or more second subgraphs are converted to one or more second vector embeddings using a predefined vectorization function. In an implementation, Graph2Vec function in Python may be used for vectorizing the first subgraph and the one or more second subgraphs. The first vector embedding and the one or more second vector embeddings are then classified into different data clusters based on similarity to embeddings of other subgraphs corresponding to a class of data cluster. The classification may be done using suitable classification logic. In an example, the data clusters may correspond to actions, operational attributes, etc. By way of converting to the data clusters, comparison of vector embeddings associated with data objects of the first subgraph to corresponding respective data objects of the one or more second subgraphs.

In an embodiment, the comparison is performed using a similarity checking algorithm. The similarity checking algorithm may compute a similarity value for a pair comprising the first vector embedding and a second vector embedding. Similarly, the similarity value for the first vector embedding and each of the second vector embeddings is computed. Further, the second vector embedding corresponding to the highest similarity value is identified. The second subgraph corresponding to the highest similarity value is contextually similar to the first subgraph. In an embodiment, the similarity checking algorithm is based on cosine similarity, wherein a similarity value of 1 indicates maximum similarity and 0 indicates no similarity. In an implementation, the EOL management module 206 and/or the processor 204 may be configured such that if the similarity value is greater than a predefined threshold, the vector embeddings are treated as similar. For example, if the similarity value for a pair of vector embeddings is greater than 0.8, an output of the similarity checking algorithm may indicate that the vector embeddings are similar. Consequently, there may be a plurality of second subgraphs contextually similar to the first subgraph. In another embodiment, the similarity checking algorithm is based on Siamese networks.

Upon identifying the contextually similar second subgraph from the knowledge graph, at least one action cluster corresponding to the contextually similar second subgraph is identified. The action cluster is indicative of the at least one circularity decision for managing the at least one part of the End-of-Life product corresponding to the health state of the at least one part of the End-of-Life product. In the present embodiment, the action cluster comprises one or more other nodes related to the contextually similar second subgraph that comprises data objects indicative of the at least one circularity decision made by the human expert and one or more actions performed in relation to the circularity decision, for the corresponding part in the other End-of-Life product. The knowledge graph is queried or traced starting from at least one node in the contextually similar second subgraph to identify the respective action cluster.

The EOL management module 206 and/or the processor 204 is further configured to generate the at least one recommendation for managing the at least one part of the End-of-Life product based on the at least one circularity decision identified from the action cluster. The EOL management module 206 and/or the processor 204 is further configured to display the at least one recommendation for managing the at least one part of the End-of-Life product, on the EOL recommendation UI 218. For example, the data objects present within the action cluster may be embedded in a 'recommendation field' within the EOL recommendation UI 218.

In an embodiment, the EOL management module 206 and/or the processor 204 is further configured to validate the circularity decision by performing a simulation, on the simulation UI 220, based on one or more predetermined simulation settings corresponding to the identified circularity decision for managing the at least one part of the End-of-Life product. In particular, the circularity decision is validated against predetermined requirements associated with applying the circularity decision to the End-of-Life product. In an example, the predetermined requirements may be based on rules and regulations for reusing the End-of-Life product in a secondary application. In an embodiment, the predetermined simulation settings are identified from the action cluster. For example, one or more nodes in the action cluster may include data objects corresponding to values of the simulation settings used by the human expert for performing simulations corresponding to a circularity decision made by the human expert. The one or more simulation settings may include loads, boundary conditions, material properties, solver settings etc. that were used by the human expert to validate the circularity decision for the other End-of-Life product. Further, a simulation model is configured based on the one or more predetermined simulation settings. In an embodiment, the simulation model may be pre-developed during a product development phase of the product. The simulation model may also be re-used with virtual representations, for example CAD models, associated with the End-of-Life product. The simulation model captures a health state of the End-of-Life product by compensating for a specific part condition. In an example, the compensation is done by updating the simulation settings. For example, the simulation settings may correspond to greater effective loads that help in capturing effect of the part condition on behaviour of the End-of-Life product. Advantageously, such compensation of the part condition enables the simulation to ensure that behaviour of the End-of-Life product is within acceptable ranges for performance and reliability. Based on the configured simulation model, one or more simulation instances are generated. In an embodiment, the one or other simulation settings used for configuring the simulation model may also be provided or modified by the user.

The simulation instances are further executed in a simulation environment, to generate a simulation result. Further, based on the simulation result generated, the identified circularity decision is validated. In an embodiment, the simulation result may be validated using a predefined logic. For example, if the End-of-Life product is a motor used in a specific primary application, and if the circularity decision is to reuse the motor in an alternative application that may be tolerant to higher vibrations in the motor, the simulations are performed to understand how the motor behaves in the alternative application with operational attributes specific to the alternative application. The simulation result may therefore indicate vibration levels in the motor when used in the alternative application. If the vibration levels are meeting a predefined value, the motor is fit for the alternative application. Therefore, the predefined logic validates the circularity decision to reuse in the alternative application, if the vibration level indicated in the simulation result is meeting the predefined value.

In another embodiment, the user may be provided an option on the simulation UI 220 to view the simulation results and to provide an input via the input device 212 accepting or rejecting the simulation results. For example, the user may click on an 'Accept results' option for accepting the simulation results, and a 'Reject results' option for rejecting the simulation results. For example, accepting the simulation results indicate to the computer system 200, that the user is satisfied with behavior of the End-of-Life product in the alternative application, and rejecting the simulation results indicate that the user is dissatisfied with behavior of the End-of-Life product in the alternative application. Based on the user's input, the EOL management module 206 and/or the processor 204 validates the recommendation.

It may be understood by the person skilled in the art that the user's inputs over time may also be used by a machine learning model to learn patterns and apply the learning to other End-of-Life products to provide better recommendations.

Further, a computer-readable medium 260 which may comprise a computer program product 262 is shown in FIG 2, wherein the computer program product 262 may be encoded with executable instructions, that when executed, cause the computer system 200 or and/or the lifecycle management platform 202 to carry out the described method.

FIG 3 illustrates an embodiment of an artificial neural network 300. Alternative terms for "artificial neural network" are "neural network", "artificial neural net" or "neural net".

The artificial neural network 300 comprises nodes 320, ..., 332 and edges 340, ..., 342, wherein each edge 340, ..., 342 is a directed connection from a first node 320, ..., 332 to a second node 320, ..., 332. In general, the first node 320, ..., 332 and the second node 320, ..., 332 are different nodes 320, ..., 332, it is also possible that the first node 320, ..., 332 and the second node 320, ..., 332 are identical. For example, in FIG 3 the edge 340 is a directed connection from the node 320 to the node 323, and the edge 342 is a directed connection from the node 330 to the node 332. An edge 340, ..., 342 from a first node 320, ..., 332 to a second node 320, ..., 332 is also denoted as "ingoing edge" for the second node 320, ..., 332 and as "outgoing edge" for the first node 320, ..., 332.

In this embodiment, the nodes 320, ..., 332 of the artificial neural network 300 may be arranged in layers 310, ..., 313, wherein the layers may comprise an intrinsic order introduced by the edges 340, ..., 342 between the nodes 320, ..., 332. In particular, edges 340, ..., 342 may exist only between neighboring layers of nodes. In the displayed embodiment, there is an input layer 310 comprising only nodes 320, ..., 322 without an incoming edge, an output layer 313 comprising only nodes 331, 332 without outgoing edges, and hidden layers 311, 312 in-between the input layer 310 and the output layer 313. In general, the number of hidden layers 311, 312 may be chosen arbitrarily. The number of nodes 320, ..., 322 within the input layer 310 usually relates to the number of input values of the neural network, and the number of nodes 331, 332 within the output layer 313 usually relates to the number of output values of the neural network.

In particular, a (real) number may be assigned as a value to every node 320, ..., 332 of the neural network 300. Here, $x^{(n)}_i$ denotes the value of the i-th node 320, ..., 332 of the n-th layer 310, ..., 313. The values of the nodes 320, ..., 322 of the input layer 310 are equivalent to the input values of the neural network 300, the values of the nodes 331, 332 of the output layer 313 are equivalent to the output value of the neural network 300. Furthermore, each edge 340,..., 342 may comprise a weight being a real number, in particular, the weight is a real number within the interval [-1, 1] or within the interval [0, 1]. Here, $w^{(m,n)}_{i,j}$ denotes the weight of the edge between the i-th node 320, ..., 332 of the m-th layer 310, ..., 313 and the j-th node 320, ..., 332 of the n-th layer 310, ..., 313. Furthermore, the abbreviation $w^{(n)}_{i,j}$ is defined for the weight $w^{(n,n+1)}_{i,j}$.

In particular, to calculate the output values of the neural network 300, the input values are propagated through the neural network. In particular, the values of the nodes 320, ..., 332 of the (n+1)-th layer 310, ..., 313 may be calculated based on the values of the nodes 320, ..., 332 of the n-th layer 310, ..., 313 by:

$$x_j^{(n+1)} = f\left(\sum x^{(n)}_i \cdot w^{(n)}_{i,j}\right) \qquad (1)$$

Herein, the function f is a transfer function (another term is "activation function"). Known transfer functions are step functions, sigmoid function (e.g. the logistic function, the generalized logistic function, the hyperbolic tangent, the Arctangent function, the error function, the smoothstep function) or rectifier (ReLU) functions.

The transfer function is mainly used for normalization purposes. In particular, the values are propagated layer-wise through the neural network, wherein values of the input layer 310 are given by the input of the neural network 300, wherein values of the first hidden layer 311 may be calculated based on the values of the input layer 310 of the neural network, wherein values of the second hidden layer 312 may be calculated based in the values of the first hidden layer 311, etc. In order to set the values $w^{(m,n)}_{i,j}$ for the edges, the neural network 300 has to be trained using training data. In particular, training data comprises training input data and training output data (denoted as $t_i$). For a training step, the neural network 300 is applied to the training input data to generate calculated output data. In particular, the training data and the calculated output data comprise a number of values, said number being equal with the number of nodes of the output layer 313. In particular, a comparison between the calculated output data and the training data is used to recursively adapt the weights within the neural network 300 (backpropagation algorithm). In particular, the weights are changed according to:

$$w'^{(n)}_{i,j} = w^{(n)}_{i,j} - \gamma \cdot \delta^{(n)}_j \cdot x^{(n)}_i \qquad (2)$$

wherein $\gamma$ is a learning rate, and the numbers $\delta^{(n)}_j$ may be recursively calculated as:

$$\delta^{(n)}_j = \left(\sum_k \delta_{(n+1)}^k \cdot w^{(n+1)}_{j,k}\right) \cdot f\left(\sum_i x^{(n)}_i \cdot w^{(n)}_{i,j}\right) \qquad (3)$$

based on $\delta^{(n+1)}_j$, if the (n+1)-th layer is not the output layer; and

$$\delta^{(n)}_j = \left(x^{(n+1)}_k - t^{(n+1)}_j\right) \cdot f\left(\sum_i x^{(n)}_i \cdot w^{(n)}_{i,j}\right) \qquad (4)$$

if the (n+1)-th layer is the output layer 313, wherein f is the first derivative of the activation function, and $t^{(n+1)}_j$ is the comparison training value for the j-th node of the output layer 313.

FIG 4 shows a workflow 400 for identifying health state of a gas turbine using a classification model, in accordance with an embodiment of the present invention. The workflow comprises steps 405 to 430.

At step 405, one or more borescope images of the gas turbine is obtained from a source A. At step 410, the one or more borescope images are preprocessed using one or more image preprocessing techniques. At step 415, the preprocessed one or more borescope images are provided to a computer vision model to identify a part condition associated with the gas turbine. The computer vision model further outputs a 16x1-dimensional feature vector 420 indicative of the part condition. For example, the categories of damage may include 'cracks', 'damage on thermal barrier coatings' or 'no damage'. Similarly, a 4x1 dimensional feature vector 425 indicative of operational attributes of the gas turbine is also generated. The feature vector 425 corresponding to the operational attributes is generated by encoding a predetermined set of operational attributes used in the primary application of the gas turbine. For example, the operational attributes may include energy output of 85000 MWh, operating temperature of 300 degree Celsius, 75% load, 100 number of starts etc. In an embodiment, a subgraph is generated based on the predetermined set of operational attributes, by mapping each of the operational attributes to a predefined ontology model for operational attributes. Further, the subgraph is vectorized using a vectorization function (e.g., Graph2Vec function of Python) to generate the feature vector. At step 430, the feature vectors are provided as inputs to a classification model in order to classify a health state HS of the gas turbine into one of 'good', 'medium' and 'healthy'.

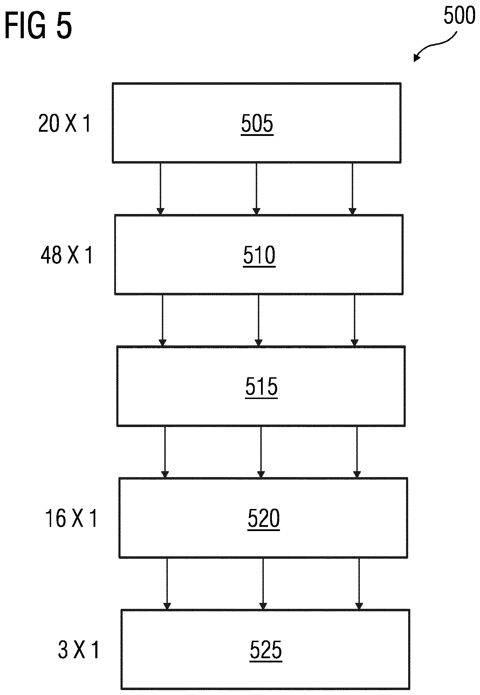

In the present embodiment, the classification model is a multi-layer perceptron 500 as shown in FIG 5. The multi-layer perceptron 500 comprises an input layer 505, a first fully connected layer 510, a dropout layer 515, a second fully connected layer 520 and an output layer 525. The activation function corresponding to neurons in the first fully connected layer 510 and the second fully connected layer 520 is the ReLU function. The ReLU function adds non-linearity to the classification model, in order to capture nuances in input data received from the input layer 505. The dropout layer 515 ensures regularization of the multi-layer perceptron. The output layer 525 is based on softmax function.

The loss function used to train the model is multi-class cross entropy.

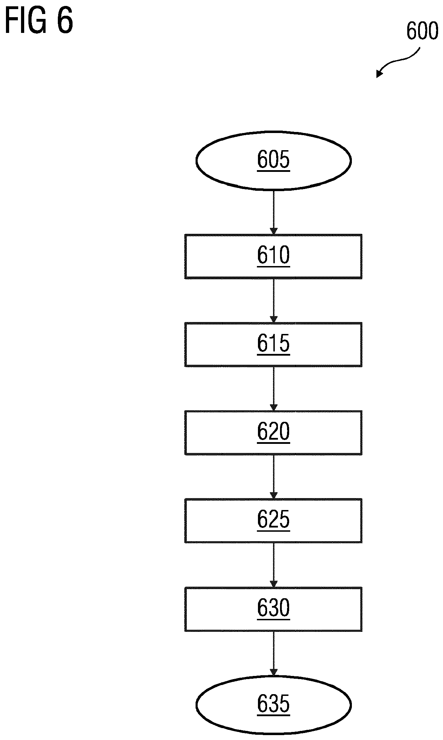

FIG 6 shows a flowchart of a method 600 for managing an End-of-Life product, in accordance with an embodiment of the present invention. The method may start at 605 and the methodology may comprise several method steps carried out through operation of at least one processor similar to the processor 204.

At step 610, a virtual representation of at least one part of the End-of-Life product is generated, using a reconstruction algorithm, based on at least one input received from a source.

At step 615, the virtual representation is processed to determine a part condition associated with the at least one part of the End-of-Life product, wherein the part condition indicates a category of damage associated with the at least one part of the End-of-Life product.

At step 620, a health state of the at least one part of the End-of-Life product is classified into at least one of a plurality of health states, based on at least the part condition and at least one operational attribute associated with the at least one part of the End-of-Life product.

At step 625, at least one circularity decision for managing the at least one part of the End-of-Life product based on the health state of the at least one part of the End-of-Life product, is identified from a knowledge graph.

At step 630, at least one recommendation for managing the at least one part of the End-of-Life product is displayed, on a graphical user interface.

At 635, the methodology may end.

It should further be appreciated that the methodology 400 may comprise other acts and features discussed previously with respect to the computer-implemented method of managing simulation artifacts.

In some examples, the methodology may further comprise the act of performing a simulation based on one or more predetermined simulation settings corresponding to the at least one recommendation for managing the at least one part of the End-of-Life product; and of validating the at least one recommendation based on a simulation result generated upon performing the simulation.

As discussed previously, acts associated with these methodologies (other than any described manual acts such as an act of manually making a selection through the input device 212) may be carried out by one or more processors. Such processor(s) may be included in one or more data processing systems, for example, that execute software components operative to cause these acts to be carried out by the one or more processors. In an example embodiment, such software components may comprise computer-executable instructions corresponding to a routine, a sub-routine, programs, applications, modules, libraries, a thread of execution, and/or the like. Further, it should be appreciated that software components may be written in and/or produced by software environments/languages/frameworks such as Java, JavaScript, Python, C, C#, C++ or any other software tool capable of producing components and graphical user interfaces configured to carry out the acts and features described herein.

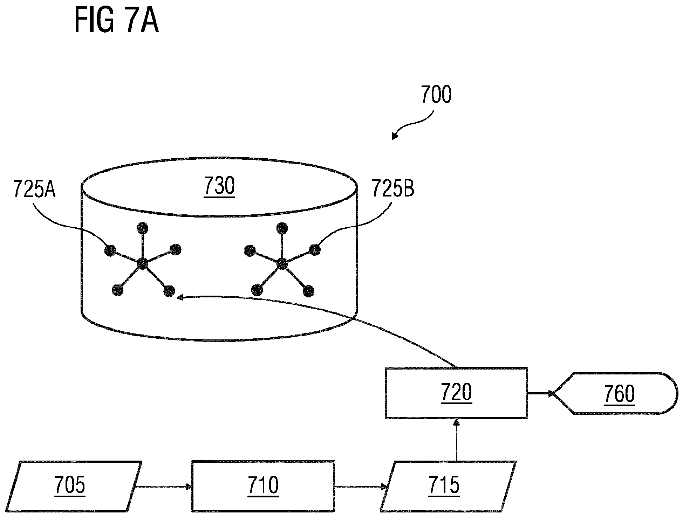

FIG 7A shows an example of a workflow 700 for generating at least one recommendation for managing a gas turbine engine at End-of-life, in accordance with an embodiment of the present invention. The gas turbine engine may include a plurality of parts such as turbine blades, compressor, combustion system, gas producer turbine, and power turbine. In the present example, only blades associated with the gas turbine engine is considered for ease of explanation.

Firstly, inputs 705 corresponding to operational attributes and a 3D scanned image of the gas turbine engine are received from a source. The inputs 705 may be, for example, provided by a user via a graphical user interface. The user may upload the 3D scanned image from a database comprising 3D scanned images of a plurality of End-of-Life products. Further, the user may also select a primary application associated with the gas turbine engine from a drop-down menu provided on the graphical user interface. Further, the user may also manually type in values for each of the operational attributes on the graphical user interface, or upload a file comprising the operational attributes, stored in the database, via the graphical user interface. In another example, the inputs 705 are received from an Application Programming Interface. For example, the Application Programming Interface may parse operational logs of the gas turbine engine to identify the operational attributes.

At step 710, a health state of each part of the gas turbine engine is identified, based on the operational attributes associated with the gas turbine engine and part condition corresponding to the part. For example, the primary application of the gas turbine engine may be in an oil & gas industry application, and the operational attributes may include an energy output of 50k MWh, and an average of 100 starts. The part condition associated with, for example, the blade may be obtained using a computer vision model similar to the method explained earlier with reference to FIG 4. In the present example, the part conditions in the blade may be identified as 'oxidation' and 'TBC spallation'. Based on the operational attributes and the part condition, a feature vector is generated. The feature vector is further provided to a classification model to identify the health state 715 of the blades. In the present example, the health state 715 is identified as *'moderate health'*. Further, based on the primary application, an identifier corresponding to the blade, the part condition, the operational attributes, and the health state 715 of the blade, a first subgraph is generated.

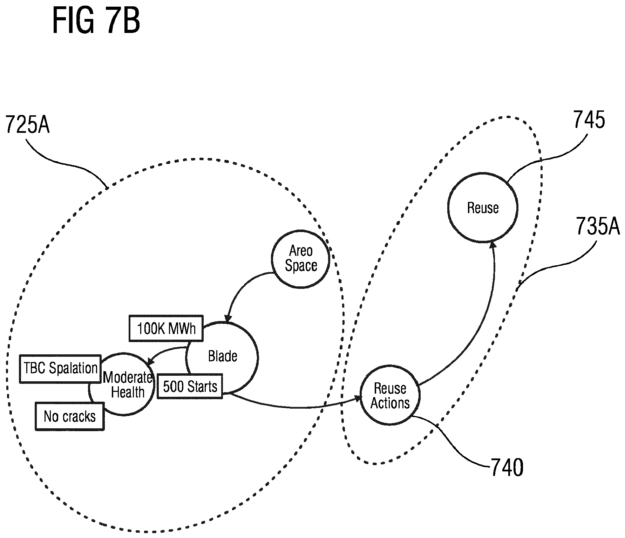

At step 720, the first subgraph is compared to each of two second subgraphs 725A and 725B present in a graph database 730. Here, the second subgraph 725A is related to a blade used in an aerospace application, of health state 'moderate health', operational attributes of 100k MWh energy output and 500 starts, and part conditions 'TBC spallation' and 'no cracks', as shown in FIG 7B. The second subgraph 725A is further associated with an action cluster 735A comprising a 'Reuse actions' node 740 for storing data objects corresponding to actions necessary to validate a 'reuse' decision (indicated by decision node 745) taken for the blade. For example, the data objects in the 'Reuse actions' node may comprise simulation settings used for performing simulations for validating whether the blade is reusable in an alternative application.

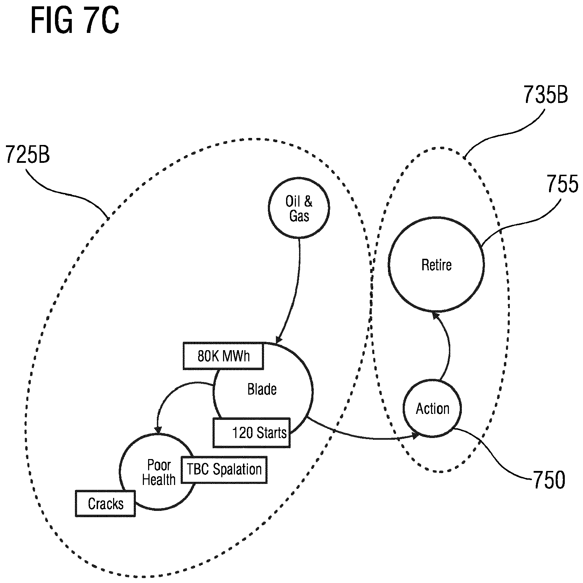

The other second subgraph 725B is associated with a blade used in an oil & gas application, of health state 'poor health', operational attributes of 80k MWh and 120 starts, and part condition of 'TBC spallation' and 'cracks', as shown in FIG 7C. The second subgraph 725B is further associated with an action cluster 735B comprising a 'Actions' node 750 that comprises data objects corresponding to actions to be taken with respect to a discard or retire decision (indicated by decision node 755) for the blade. For example, the data objects in the node 750 may be of text type and may include text-based description of the actions. A similarity value is computed by comparing vector embeddings of the first subgraph to vector embeddings of each of the second subgraphs 725A and 725B, using cosine similarity. Further, the second subgraph corresponding to the highest similarity value is identified as being contextually similar to the first subgraph. In the present example, the second subgraph 725A may be identified as being contextually similar to the first subgraph.

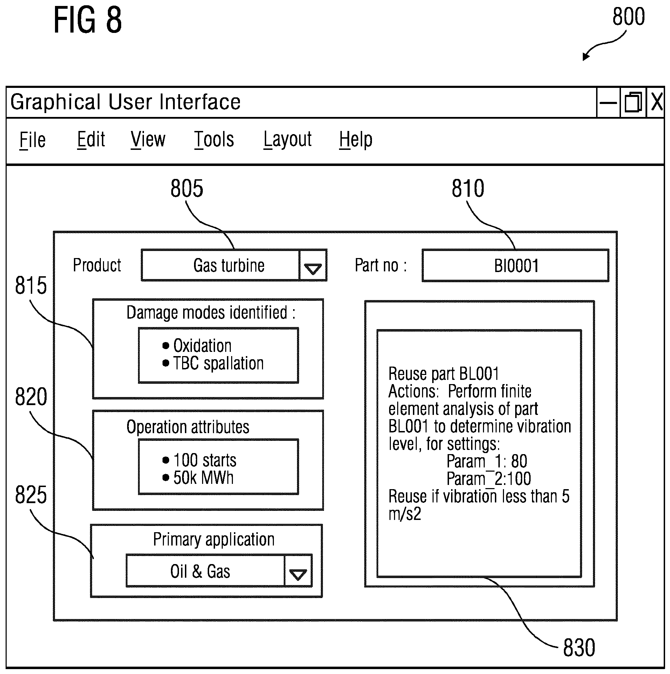

Further, the decision node 755 of the action cluster 735A corresponding to the contextually similar second subgraph 725A is identified. Further, a recommendation is generated on the graphical user interface, based on data objects present in the action cluster 735A. The action cluster 735A corresponding to the second subgraph 725A indicates 'reuse' of the blade. Therefore, the recommendation corresponds to reuse of the blade by performing one or more actions present in the 'Reuse actions' node 740. Further, the recommendations are displayed on the graphical user interface, as indicated by step 760. The recommendation may be generated as shown in FIG 8.

FIG 8 shows a graphical user interface 800, in accordance with an embodiment of the present invention. The graphical user interface 800 is explained in conjunction with the workflow 700 described earlier. The graphical user interface 800 comprises a first section 805 indicating an identifier associated with the End-of-Life product, a second section indicating an identifier associated with a part of the End-of-Life product. In the present example, the End-of-Life product is a gas turbine, and the part is a blade of the gas turbine with part number BL001. The graphical user interface 800 further comprises a section 815 displaying part conditions in the blade (identified at step 710), a section 820 displaying operational attributes of the gas turbine, a section 825 displaying primary application of the gas turbine, and section 830 displaying recommendations generated based on the action cluster 735A. Herein, the recommendations include a 'Reuse' decision identified from the decision node 745. Further, actions to be performed to validate the 'Reuse' decision is provided as a text-based description of the form:

*Perform finite element analysis of part BL001 to determine vibration level, for settings:*

*Param_1: 80*
*Param_2:100*

*Reuse if vibration less than 15 mm/s*

The user may further validate the 'Reuse' decision by performing the finite element analysis based on the settings provided in the recommendations.

The suggested approach offers several advantages over other approaches. For example, the suggested approach enables an automated process for identifying actions to be performed for managing End-of-Life products or parts therein, especially for manufactured products where Extended Producers Responsibility is applicable.

The present invention provides recommendations based on pre-existing expert knowledge corresponding to other End-of-Life products, stored in the form of knowledge graphs. The knowledge graph-based approach is reliable and improves throughput associated with managing End-of-Life products, compared to manual approaches that involve human efforts in segregating End-of-Life products and/or the parts for reuse, recycle etc. In an example, the present invention reduces risk of knowledge loss with change in human resources employed to manage End-of-Life products. Further, the suggested approach also helps in validating the recommendations with respect to alternative applications for an End-of-Life product with the help of simulations. As a result, a confidence level associated with recommendations provided by the methodology 600 is improved through prior validation.

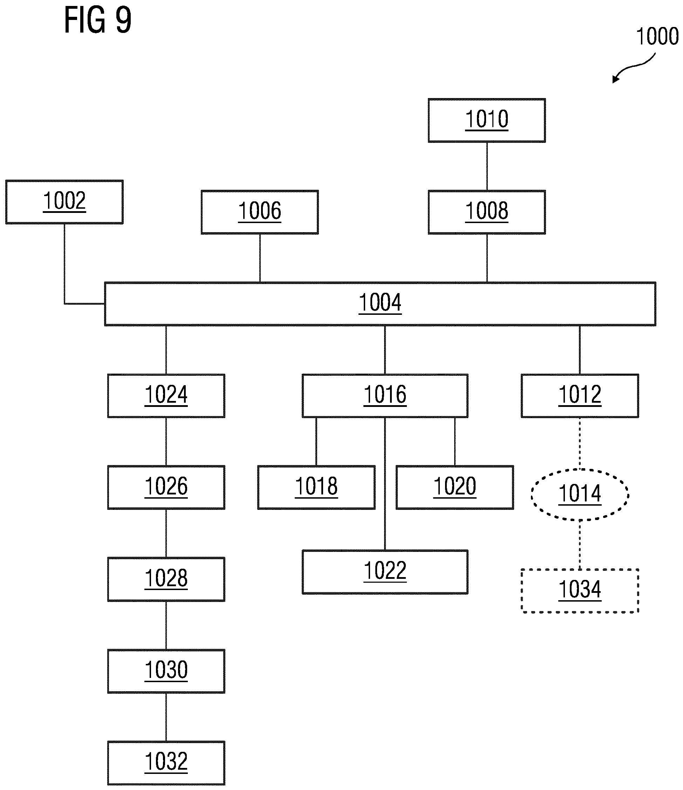

FIG 9 illustrates a block diagram of a data processing system 1000 (also referred to as a computer system) in which an embodiment can be implemented, for example, as a part of a product system, and/or other system operatively configured by software or otherwise to perform the processes as described herein. The data processing system 1000 may include, for example, the lifecycle management platform 202 and/or the computer system or data processing system 200 mentioned above. The data processing system 1000 depicted includes at least one processor 1002 (e.g., a CPU) that may be connected to one or more bridges/controllers/buses 1004 (e.g., a north bridge, a south bridge). One of the buses 1004, for example, may include one or more I/O buses such as a PCI Express bus. Also connected to various buses in the depicted example may include a main memory 1006 (RAM) and a graphics controller 1008. The graphics controller 1008 may be connected to one or more display devices 1010. It should also be noted that in some embodiments one or more controllers (e.g., graphics, south bridge) may be integrated with the CPU (on the same chip or die). Examples of CPU architectures include IA-32, x86-64, and ARM processor architectures.

Other peripherals connected to one or more buses may include communication controllers 1012 (Ethernet controllers, Wi-Fi controllers, cellular controllers) operative to connect to a local area network (LAN), Wide Area Network (WAN), a cellular network, and/or other wired or wireless networks 1014 or communication equipment.

Further components connected to various buses may include one or more I/O controllers 1016 such as USB controllers, Bluetooth controllers, and/or dedicated audio controllers (connected to speakers and/or microphones). It should also be appreciated that various peripherals may be connected to the I/O controller(s) (via various ports and connections) including input devices 1018 (e.g., keyboard, mouse, pointer, touch screen, touch pad, drawing tablet, trackball, buttons, keypad, game controller, gamepad, camera, microphone, scanners, motion sensing devices that capture motion gestures), output devices 1020 (e.g., printers, speakers) or any other type of device that is operative to provide inputs to or receive outputs from the data processing system. Also, it should be appreciated that many devices referred to as input devices or output devices may both provide inputs and receive outputs of communications with the data processing system. For example, the processor 1002 may be integrated into a housing (such as a tablet) that includes a touch screen that serves as both an input device and a display device. Further, it should be appreciated that some input devices (such as a laptop) may include a plurality of different types of input devices (e.g., touch screen, touch pad, keyboard). Also, it should be appreciated that other peripheral hardware 1022 connected to the I/O controllers 1016 may include any type of device, machine, or component that is configured to communicate with a data processing system.

Additional components connected to various buses may include one or more storage controllers 1024 (e.g., SATA). A storage controller may be connected to a storage device 1026 such as one or more storage drives and/or any associated removable media, which can be any suitable non-transitory machine usable or machine-readable storage medium. Examples include nonvolatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and/or computer media. Also, in some examples, a storage device such as an SSD may be connected directly to an I/O bus 1004 such as a PCI Express bus.

A data processing system in accordance with an embodiment of the present disclosure may include an operating system 1028, software/firmware 1030, and data stores 1032 (that may be stored on a storage device 1026 and/or the memory 1006). Such an operating system may employ a command line interface (CLI) shell and/or a graphical user interface (GUI) shell. The graphical user interface shell permits multiple display windows to be presented in the graphical user interface simultaneously, with each display window providing an interface to a different application or to a different instance of the same application. A cursor or pointer in the graphical user interface may be manipulated by a user through a pointing device such as a mouse or touch screen. The position of the cursor/pointer may be changed and/or an event, such as clicking a mouse button or touching a touch screen, may be generated to actuate a desired response. Examples of operating systems that may be used in a data processing system may include Microsoft Windows, Linux, UNIX, iOS, and Android operating systems. Also, examples of data stores include data files, data tables, relational database (e.g., Oracle, Microsoft SQL Server), database servers, or any other structure and/or device that is capable of storing data, which is retrievable by a processor.

The communication controllers 1012 may be connected to the network 1014 (not a part of data processing system 1000), which can be any public or private data processing system network or combination of networks, as known to those of skill in the art, including the Internet. Data processing system 1000 can communicate over the network 1014 with one or more other data processing systems such as a server 1034 (also not part of the data processing system 1000). However, an alternative data processing system may correspond to a plurality of data processing systems implemented as part of a distributed system in which processors associated with several data processing systems may be in communication by way of one or more network connections and may collectively perform tasks described as being performed by a single data processing system. Thus, it is to be understood that when referring to a data processing system, such a system may be implemented across several data processing systems organized in a distributed system in communication with each other via a network.

Further, the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely.

In addition, it should be appreciated that data processing systems may be implemented as virtual machines in a virtual machine architecture or cloud environment. For example, the processor 1002 and associated components may correspond to a virtual machine executing in a virtual machine environment of one or more servers. Examples of virtual machine architectures include VMware ESCi, Microsoft Hyper-V, Xen, and KVM.

Those of ordinary skill in the art will appreciate that the hardware depicted for the data processing system may vary for particular implementations. For example, the data processing system 1000 in this example may correspond to a computer, workstation, server, PC, notebook computer, tablet, mobile phone, and/or any other type of apparatus/system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

Also, it should be noted that the processor described herein may be located in a server that is remote from the display and input devices described herein. In such an example, the described display device and input device may be included in a client device that communicates with the server (and/or a virtual machine executing on the server) through a wired or wireless network (which may include the Internet). In some embodiments, such a client device, for example, may execute a remote desktop application or may correspond to a portal device that carries out a remote desktop protocol with the server to send inputs from an input device to the server and receive visual information from the server to display through a display device. Examples of such remote desktop protocols include Teradici's PCoIP, Microsoft's RDP, and the RFB protocol. In such examples, the processor described herein may correspond to a virtual processor of a virtual machine executing in a physical processor of the server.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein, the term 'processor' corresponds to any electronic device that is configured via hardware circuits, software, and/or firmware to process data. For example, processors described herein may correspond to one or more (or a combination) microprocessors, CPU, FPGA, ASIC, or any other integrated circuit (IC) or other type of circuit that is capable of processing data in a data processing system, which may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 1000 may conform to any of the various current implementations and practices known in the art.

Also, it should be understood that the words or phrases used herein should be construed broadly, unless expressly limited in some examples. For example, the terms "include" and "comprise," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

Also, although the terms "first", "second", "third" and so forth may be used herein to describe various elements, functions, or acts, these elements, functions, or acts should not be limited by these terms. Rather these numeral adjectives are used to distinguish different elements, functions or acts from each other. For example, a first element, function, or act could be termed a second element, function, or act, and, similarly, a second element, function, or act could be termed a first element, function, or act, without departing from the scope of the present disclosure.

In addition, phrases such as "processor is configured to" carry out one or more functions or processes, may mean the processor is operatively configured to or operably configured to carry out the functions or processes via software, firmware, and/or wired circuits. For example, a processor that is configured to carry out a function/process may correspond to a processor that is executing the software/firmware, which is programmed to cause the processor to carry out the function/process and/or may correspond to a processor that has the software/firmware in a memory or storage device that is available to be executed by the processor to carry out the function/process. It should also be noted that a processor that is "configured to" carry out one or more functions or processes, may also correspond to a processor circuit particularly fabricated or "wired" to carry out the functions or processes (e.g., an ASIC or FPGA design). Further the phrase "at least one" before an element (e.g., a processor) that is configured to carry out more than one function may correspond to one or more elements (e.g., processors) that each carry out the functions and may also correspond to two or more of the elements (e.g., processors) that respectively carry out different ones of the one or more different functions.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present patent document should be read as implying that any particular element, step, act, or function is an essential element, which must be included in the claim scope: the scope of patented subject matter is defined only by the allowed claims.

List of reference numerals

| | |
|---|---|
| 200 | computer system |
| 202 | lifecycle management platform |
| 204 | at least one processor 204 |
| 206 | EOL management module |
| 208 | memory |
| 212 | at least one input device |
| 214 | at least one display device |
| 216 | graphical user interface |
| 218 | EOL recommendation UI |
| 220 | simulation UI |
| 222 | data store |
| 224 | file database |
| 226 | graph database |
| 300 | artificial neural network |
| 320, ..., 332 | nodes of the artificial neural network |
| 340, ..., 342 | edges of the artificial neural network |
| 310 | input layer |
| 311 | first hidden layer |
| 312 | second hidden layer |
| 313 | output layer |
| 1000 | data processing system |
| 1002 | processor |
| 1004 | bridges/controllers/buses |
| 1006 | memory |
| 1008 | graphics controller |
| 1010 | display devices |
| 1012 | communication controllers |
| 1014 | networks |
| 1016 | I/O controllers |
| 1018 | input devices |
| 1020 | output devices |
| 1022 | peripheral hardware |
| 1024 | storage controllers |
| 1026 | storage device |
| 1028 | operating system |
| 1030 | software/firmware |
| 1032 | data stores |
| 1034 | server |

**Claims**

1. A computer-implemented method for managing an End-of-Life product, the method comprising:

• generating, by a processor (204), a virtual representation of at least one part of the End-of-Life product, using a reconstruction algorithm, based on at least one input received from a source (212, 224);
• processing the virtual representation to determine a part condition associated with the at least one part of the End-of-Life product, wherein the part condition indicates a category of damage associated with the at least one part of the End-of-Life product;
• classifying a health state of the at least one part of the End-of-Life product into at least one of a plurality of health states, based on at least the part condition and at least one operational attribute associated with the at least one part of the End-of-Life product;
• identifying, from a knowledge graph, at least one circularity decision for managing the at least one part of the End-of-Life product based on the health state of the at least one part of the End-of-Life product; and
• generating at least one recommendation for managing the at least one part of the End-of-Life product based on the at least one circularity decision identified, on a graphical user interface (216).

2. The method according to claim 1, wherein the virtual representation is a multi-dimensional representation.

3. The method according to claim 1, wherein if the virtual representation is a two-dimensional image, processing the virtual representation to determine the part condition associated with the at least one part of the End-of-Life product comprises:

• providing the two-dimensional image to a trained computer vision model, wherein an output of the computer vision model is indicative of the part condition.

4. The method according to claim 1, wherein if the virtual representation is a three-dimensional model, processing the virtual representation to determine the part condition associated with the at least one part of the End-of-Life product comprises:

• comparing the three-dimensional model of the at least one part of the End-of-Life product to a three-dimensional model corresponding to an original design of the product to identify one or more geometric features indicative of deviations from the original design of the product; and
• analyzing the one or more geometric features using an artificial intelligence model, wherein an output of the artificial intelligence model is indicative of the part condition.

5. The method according to claim 1, wherein classifying the health state of the at least one part of the End-of-Life product into at least one of the plurality of health states, based on at least the part condition and the at least one operational attribute associated with the at least one part of the End-of-Life product comprises:

• providing a feature vector indicative of at least the part condition and the at least one operational attribute to a classification model, wherein an output of the classification model is indicative of the health state of the at least one part of the End-of-Life product.

6. The method according to claim 1, wherein identifying the at least one circularity decision for managing the at least one part of the End-of-Life product based on the health state of the at least one part of the End-of-Life product, from the knowledge graph comprises:

• generating a first subgraph based on at least the health state, the part condition, and the operational attribute of the at least one part of the End-of-Life product and a primary application of the End-of-Life product;
• comparing the first subgraph to one or more second subgraphs present in the knowledge graph to identify a contextually similar second subgraph; and
• identifying at least one action cluster corresponding to the contextually similar second subgraph, wherein the action cluster is indicative of the at least one circularity decision for managing the at least one part of the End-of-Life product corresponding to the health state of the at least one part of the End-of-Life product.

7. The method according to claim 6, wherein comparing the first subgraph to the one or more second subgraphs present in the knowledge base to identify the contextually similar second subgraph comprises:

• comparing vector embeddings of the first subgraph and the one or more second subgraphs using a similarity checking algorithm.

8. The method according to claim 1, further comprising:

• performing a simulation based on one or more predetermined simulation settings corresponding to the identified circularity decision for managing the at least one part of the End-of-Life product; and

• validating the identified circularity decision based on a simulation result generated upon performing the simulation.

9. The method according to claims 6 and 8, wherein the one or more predetermined simulation settings are identified from the action cluster corresponding to the contextually similar second subgraph.

10. The method according to claim 9, wherein performing the simulation based on the one or more predetermined simulation settings corresponding to the identified circularity decision for managing lifecycle for the at least one part of the End-of-Life product comprises:

• configuring a simulation model based on the one or more predetermined simulation settings; and
• executing simulation instances corresponding to the configured simulation model in a simulation environment, to generate the simulation result.

11. The method according to claim 1, wherein the knowledge graph is generated by:

• obtaining, from one or more sources (212, 224), one or more data objects comprising expert knowledge associated with each of the one or more other End-of-Life products;
• mapping the one or more data objects to a predetermined ontology model; and
• using a predefined library to compute triples based on relationships between mapped data objects in the predetermined ontology model, wherein the computed triples correspond to the knowledge graph.

12. A computer system (200) arranged and configured to execute the steps of the computer-implemented method according to any one of the preceding claims 1 to 11.

13. A computer program product (262), comprising computer program code which, when executed by a computer system (200), cause the computer system (200) to carry out the method of one of the claims 1 to 11.

14. A computer-readable medium (260) comprising a computer program product (262) comprising computer program code which, when executed by a computer system (200), cause the computer system (200) to carry out the method of one of the claims 1 to 11.

# FIG 1

100

FIG 2

200

202

222

224

226

204

208

206

212

214

216

218

220

260

262

# FIG 3

300

FIG 4

# FIG 5

500

20 X 1 — 505

48 X 1 — 510

515

16 X 1 — 520

3 X 1 — 525

# FIG 6

600

```
    ╭─────────╮
    │   605   │
    ╰─────────╯
         │
         ▼
    ┌─────────┐
    │   610   │
    └─────────┘
         │
         ▼
    ┌─────────┐
    │   615   │
    └─────────┘
         │
         ▼
    ┌─────────┐
    │   620   │
    └─────────┘
         │
         ▼
    ┌─────────┐
    │   625   │
    └─────────┘
         │
         ▼
    ┌─────────┐
    │   630   │
    └─────────┘
         │
         ▼
    ╭─────────╮
    │   635   │
    ╰─────────╯
```

# FIG 7A

# FIG 7B

## FIG 7C

725B

735B

755

Oil &
Gas

Retire

80K MWh

Blade

120 Starts

Action

Poor
Health

TBC Spalation

Cracks

750

# FIG 8

800

**Graphical User Interface**   — ⊡ X

File    Edit    View    Tools    Layout    Help

805                                          810

815

Product    [ Gas turbine    ▽ ]    Part no :    [    BI0001    ]

Damage modes identified :

- Oxidation
- TBC spallation

820

Operation attributes

- 100 starts
- 50k MWh

825

Primary application

[ Oil & Gas    ▽ ]

Reuse part BL001
Actions:  Perform finite
element analysis of part
BL001 to determine vibration
level, for settings:
        Param_1: 80
        Param_2:100
Reuse if vibration less than 5
m/s2

830

# FIG 9

1000

```
                                              ┌──────────┐
                                              │   1010   │
                                              └────┬─────┘
                                                   │
┌──────────┐        ┌──────────┐             ┌────┴─────┐
│   1002   │        │   1006   │             │   1008   │
└────┬─────┘        └────┬─────┘             └────┬─────┘
     │                   │                        │
     │      ┌────────────┴────────────────────────┴──────┐
     └──────┤                   1004                      │
            └──┬──────────────────┬───────────────────┬───┘
               │                  │                   │
          ┌────┴─────┐       ┌────┴─────┐        ┌────┴─────┐
          │   1024   │       │   1016   │        │   1012   │
          └────┬─────┘       └──┬────┬──┘        └────┬─────┘
               │                │    │                ┊
          ┌────┴─────┐     ┌────┴─┐ ┌┴─────┐      ⸨  1014  ⸩
          │   1026   │     │ 1018 │ │ 1020 │          ┊
          └────┬─────┘     └──────┘ └──┬───┘      ┌ ─ ┴ ─ ┐
               │                       │          ╎  1034 ╎
          ┌────┴─────┐            ┌────┴─────┐     └ ─ ─ ─ ┘
          │   1028   │            │   1022   │
          └────┬─────┘            └──────────┘
               │
          ┌────┴─────┐
          │   1030   │
          └────┬─────┘
               │
          ┌────┴─────┐
          │   1032   │
          └──────────┘
```

Europäisches
Patentamt

European
Patent Office

Office européen
des brevets

# EUROPEAN SEARCH REPORT

Application Number

EP 22 19 9221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/204295 A1 (GILDEIN II MICHAEL E [US] ET AL) 19 July 2018 (2018-07-19) | 1-7, 11-14 | INV. G06Q10/30 |
| Y | * paragraphs [0001], [0017], [0021] – [0022], [0033], [0039], [0047] – [0049], [0076], [0082] – [0086]; figures 3-4, 7-8 * | 8-10 | |
| A | Mr. Ollie: "Knowledge graph", , 1 May 2022 (2022-05-01), XP093074792, Retrieved from the Internet: URL:https://en.wikipedia.org/w/index.php?title=Knowledge_graph&oldid=1085684079 [retrieved on 2023-08-17] * page 1 * | 1-14 | |
| A | CN 113 522 770 A (SHANDONG MIFENG INTELLIGENT MFG CO LTD) 22 October 2021 (2021-10-22) * claims 2-3 * | 4 | |
| Y | KONDOH S ET AL: "Multi-agent simulation of component reuse focusing on variations in user preference", CIRP JOURNAL OF MANUFACTURING SCIENCE AND TECHNOLOGY, ELSEVIER, AMSTERDAM, NL, vol. 1, no. 4, 1 January 2009 (2009-01-01) , pages 287-293, XP026394657, ISSN: 1755-5817 [retrieved on 2009-06-23] * pages 4-6 * | 8-10 | **TECHNICAL FIELDS SEARCHED (IPC)** G06Q |

-/--

The present search report has been drawn up for all claims

| Place of search | Date of completion of the search | Examiner |
|---|---|---|
| Munich | 17 August 2023 | Diaz Calvo, Sonia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................
& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 22 19 9221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Samanvi Kanigalpula ET AL: "Subgraph Similarity Search in Large Graphs", , 16 December 2015 (2015-12-16), pages 1-10, XP093074661, DOI: 10.48550/arxiv.1512.05256 Retrieved from the Internet: URL:http://personales.upv.es/thinkmind/dl/conferences/dbkda/dbkda_2016/dbkda_2016_5_20_57016.pdf [retrieved on 2023-08-17] * page 1 * * abstract * ----- | 6,7 | |
| A | US 2002/128790 A1 (WOODMANSEE DONALD [US]) 12 September 2002 (2002-09-12) * paragraphs [0003], [0047] * ----- | 1-14 | |

TECHNICAL FIELDS
SEARCHED      (IPC)

The present search report has been drawn up for all claims

| Place of search | Date of completion of the search | Examiner |
|---|---|---|
| Munich | 17 August 2023 | Diaz Calvo, Sonia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    .....................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 19 9221

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2023

| Patent document cited in search report | Publication date | Patent family member(s) | Publication date |
|---|---|---|---|
| US 2018204295 A1 | 19-07-2018 | US 2018204295 A1<br>US 2018204296 A1 | 19-07-2018<br>19-07-2018 |
| CN 113522770 A | 22-10-2021 | NONE | |
| US 2002128790 A1 | 12-09-2002 | NONE | |

EPO FORM P0459

For more details about this annex : see Official Journal of the European Patent Office, No. 12/82